# EUROPEAN PATENT SPECIFICATION

(11) **EP 2 162 616 B1**
(45) Date of publication and mention of the grant of the patent: **17.04.2013**
(21) Application number: 07722738.7
(22) Date of filing: 29.04.2007
(51) Int. Cl.: F03B 13/18

(54) **SEA WAVE ENERGY CONVERTER**
MEERESWELLENENERGIEUMWANDLER
CONVERTISSEUR DE L'ÉNERGIE DES VAGUES

(43) Date of publication of application: 17.03.2010
(73) Proprietor: El-fekky, Alaaeldeen Hassan, Cairo (EG)
(72) Inventor: El-fekky, Alaaeldeen Hassan, Cairo (EG)
(74) Representative: Lawrence, Richard Anthony
(86) International application number: PCT/EG2007/000014
(87) International publication number: WO 2008/131786

(56) References cited:
- WO-A1-81/00284
- WO-A1-99/14489
- DE-A1- 2 847 750
- GB-A- 191 107 087
- JP-A- 2004 270 693
- US-A- 415 812
- US-A- 607 072
- US-A- 1 923 887

## Description

### Technical Field

The present invention relates to producing electricity from sea waves. It is possible to design new boats that work without fuel. The present invention may act as an emergency generator for sea vessels.

### Background Art

The following are examples of elements that are useful in this field:
- water turbine based on difference in head;
- high and low tide;
- underwater buoyant device;
- overtopping device (water turbine base);
- oscillating water column; and
- floating devices (two floating devices hinged together).

JP 2004 270693 discloses a device for generating electrical power from wave motion. It comprises an endless belt (35) fitted for rotation about first and second sprockets (31 and 33) and a moving frame (61) coupled by a coupling rod (61) to a float (23). The moving frame is connected to the axes of four sprockets (41, 43, 51 and 53), two to each side of the endless belt (35) and adapted to contact with the outside of the belt. This design is intended to provide a simplified structure compared to rack-and-pinion prior art.

### Brief Description of Figures

Figure 1/11 represents the main items of the converter, which are: a floating cylinder (1), a transporter arm (2) that moves up and down inside the sealed box (3), a sealed converter box (3), an external wire mesh (4), a driven axe (12) and a flywheel (13).
Figure 2/11 represents the main items of the sealed converter box which are: the ratchet gears (5), (6), (7), (8), the metal wheel (9) and a holder (10) to fix (7), (8), (9) together at a precise distance from each other and a chain belt (11).
Figure 3/11 represents the fixation of the holder (10) with the transporter arm (2).
Figure 4/11 represents the increasing numbers of the holder (10) according to the design parameters.
Figure 5/11 represents the free connection between the transporter arm (2) and the floating cylinder (1) inside the cylindrical wire mesh and the extra weight (23).
Figure 6/11 represents the alternative holder using ratchet levers instead of ratchet gears.

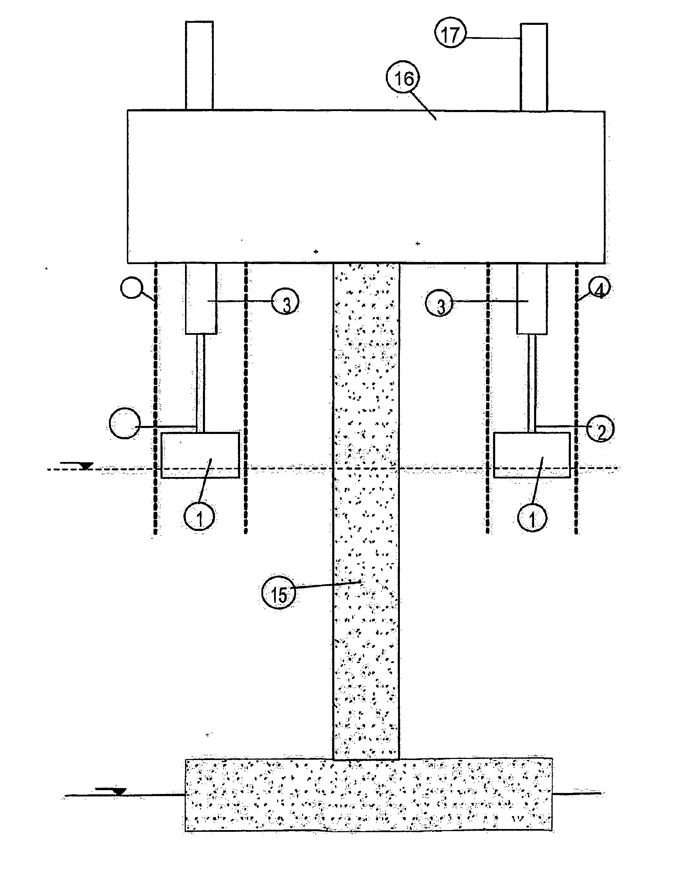

Figure 7/11 represents the skeleton of the station (15) with a foundation on the sea bed and the station room at a certain height above the sea level.
Figure 8/11 represents the station room (16) which includes 18 converters and indicates floating cylinders at different heights according to the sea wave (19).
Figure 9/11 represents the station room (16) in off position and different wave amplitude (19).
Figure 10/11 represents the station room (16) erected directly on the beach.
Figure 11/11 represents the converters erected on a sea vessel (Fig.1 is an ON position, Fig.2 is an OFF position).

### Summary of the Invention

The present invention is a wave motion conversion unit comprising: a float (1) and a guide plate (10) connected by a transporter arm (2), wherein a first end of the transporter arm (2) is fixed to the guide plate (10) and a second end of the transporter arm (2) is fixed to the float (1); a closed loop of chain belt (11) arranged vertically in use; an upper ratchet gear (5) and a lower ratchet gear (6) engaged with an inside of the chain belt, wherein the upper ratchet gear (5) is adapted to be driven in a first direction and freely rotatable in a second direction, and wherein the lower ratchet gear (6) is adapted to maintain the chain belt (11) in tension in use; a left side ratchet gear (8) and a right side ratchet gear (7), wherein both the left side ratchet gear (8) and the right side ratchet gear (7) are fixed to the guide plate (10) which is movable with respect to the chain belt (11), whereby the left side ratchet gear (8) and the right side ratchet gear (7) are disposed to either side of the chain belt (11) and are engaged with an outside of the chain belt (11), whereby both the left side ratchet gear (8) and the right side ratchet gear (7) are locked to prevent rotation in the first direction but are adapted for free rotation in the second direction; and a wheel (9), used to guide the chain belt into contact with the left side ratchet gear (8) and the right side ratchet gear (7); wherein the chain belt (11), the guide plate (10) and the ratchet gears (5, 6, 7, 8) are disposed in a sealed box (3).

### Detailed Description of the Invention

The present invention is a mechanical device that consists of: a floating cylinder (1), a transporter arm (2), a sealed converter box (3) and an external cylindrical wire mesh (4). Its function is based on two phenomena: gravity and the buoyant force (Archimedes).

It has a motion similar to the motion of the internal combustion engine, but with active up and down strokes and with a very flexible stroke length (synchronized with the wave amplitude).

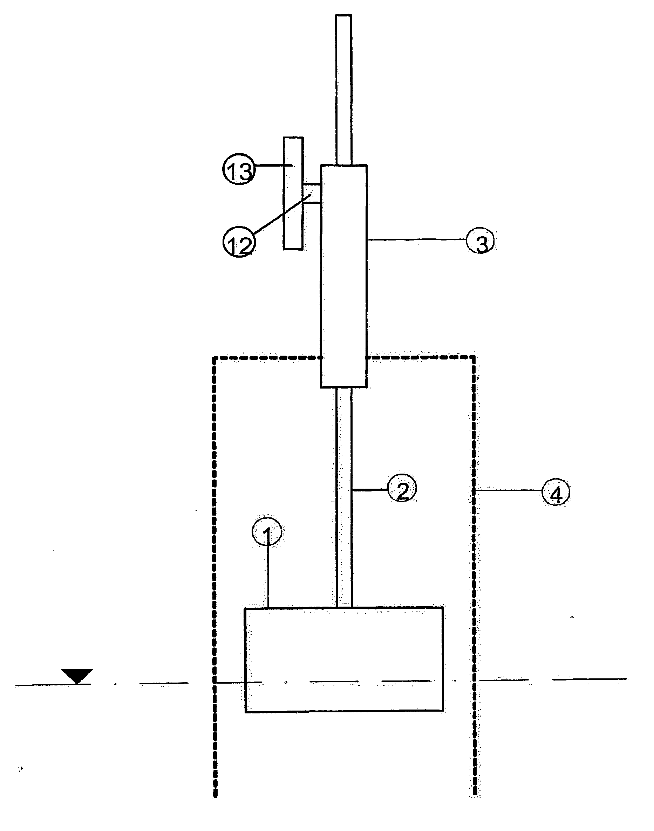

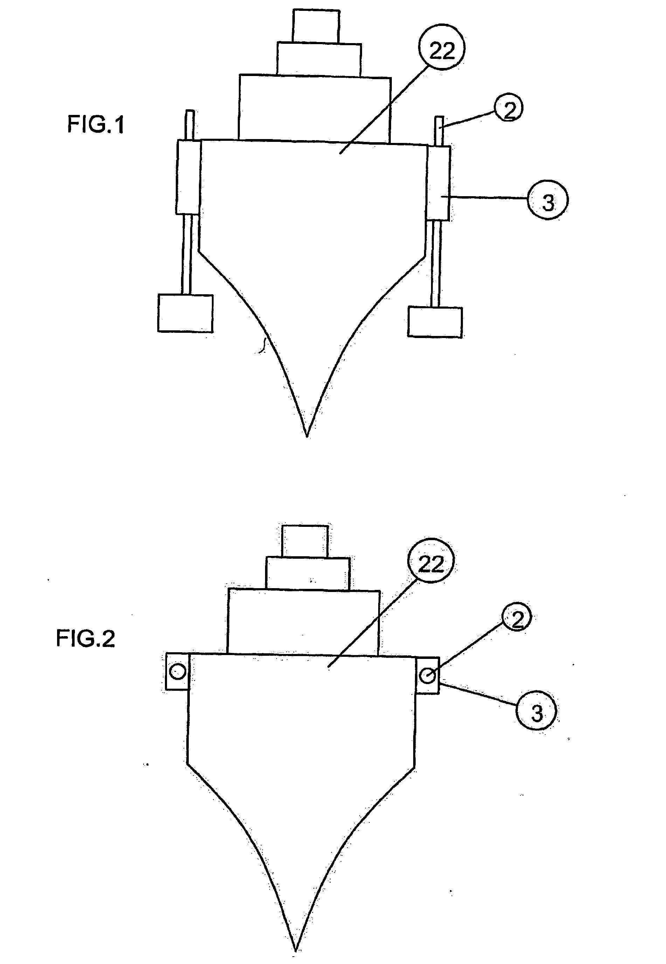

When a sea wave rises, it pushes the floating cylinder (1) upwards (due to the buoyant force). See Figure 1/11 which shows the pushing of the transporter arm (2) through the inside of the sealed converter box (3), which converts the linear motion into clockwise rotational motion. When the wave comes down, the weight of the movable mechanical parts and the arm (2) move down by the force of gravity inside the box (3), converting this motion into rotational motion in the same direction (clockwise). The rotational motion is then transported through the rod (12) to the small flywheel (13). The external wire mesh (4) saves the floating cylinder (1) in a position under the arm (2), because of the free connection between them (see Figures 1/11 and 5/11).

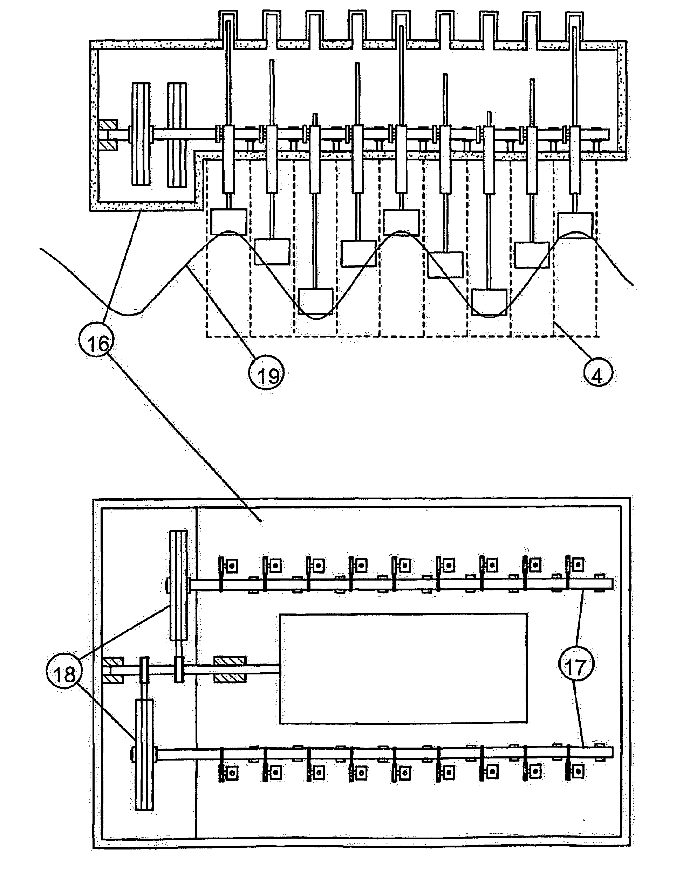

If we consider one converter as one cylinder (in an internal combustion engine), any number of converters may be put in one station accumulated together electrically or mechanically to obtain the required power (see Figures 8/11 and 9/11).

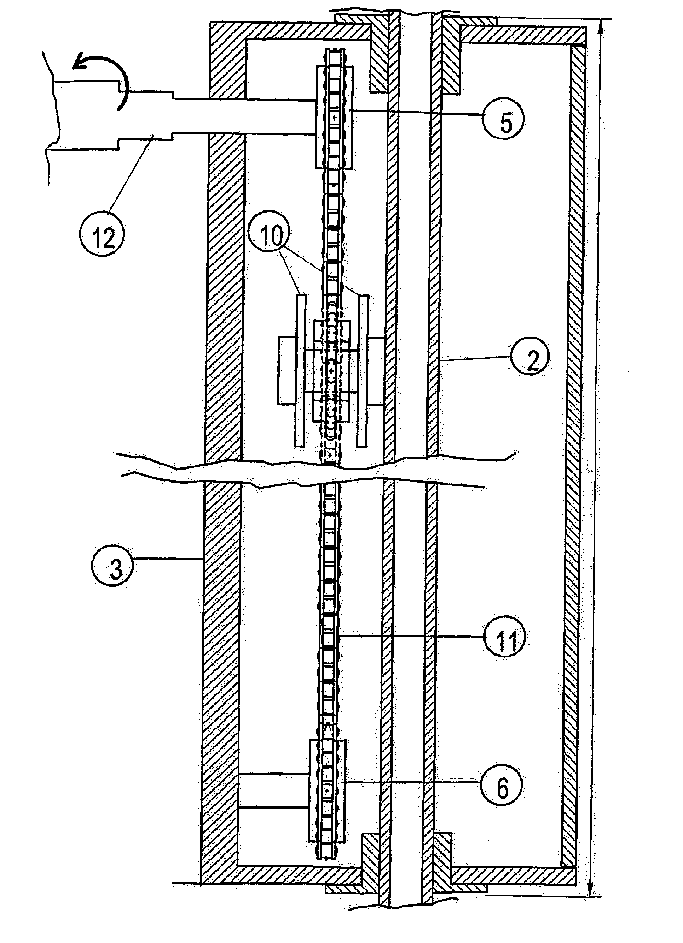

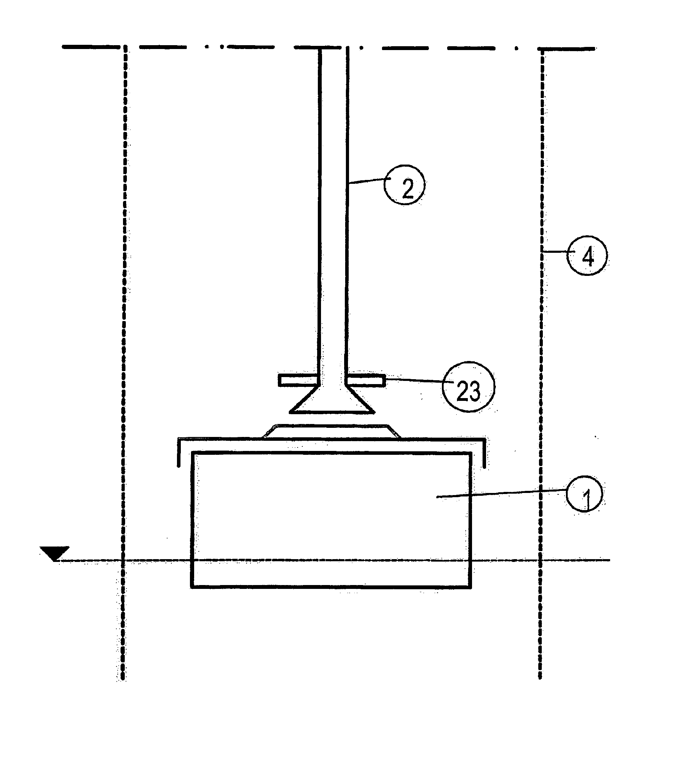

The movable mechanical parts are (2), (10) (see Figure 3/11) and the extra weight (23), if needed (see Figure 5/11).

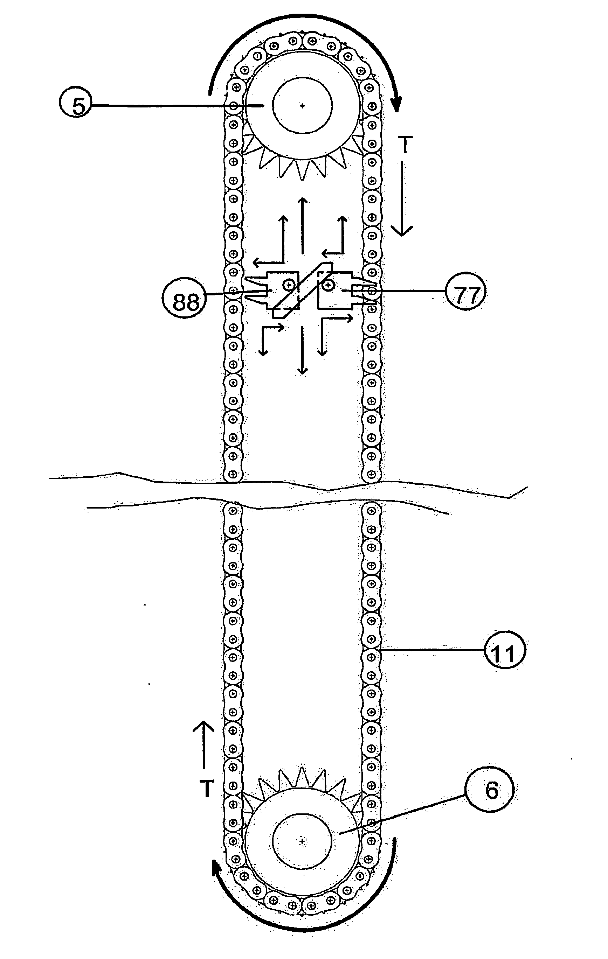

The sealed converter box consists of the following parts:
- a driven ratchet gear (5);
- a negative ratchet gear (6) for holding a chain belt (11) in a vertical position and it rotates negatively in clockwise direction;
- a tension ratchet gear (7) (it is locked in clockwise direction) in down stroke and negative (rotate free in anticlockwise direction) in up stroke (or ratchet lever loaded in down stroke and unloaded in up stroke; see Figure 6 part (77) as alternative solution);
- a tension ratchet gear (8) (it is locked in clockwise direction) in up stroke and negative (rotate free in anticlockwise direction) in down stroke (or ratchet lever loaded in up stroke and unloaded in down stroke; see Figure 6/11 part (88) as alternative solution);
- a metal wheel (9) to guide the chain belt (11) in a fit position with the two gears (7) and (8);
- a holder (10) to hold (7), (8) and (9) attached together to ensure them working together and it is fixed with the transporter arm (2); and
- a chain belt (11) which transmits the linear motion from the holder (11) to the gears (5) and (6).

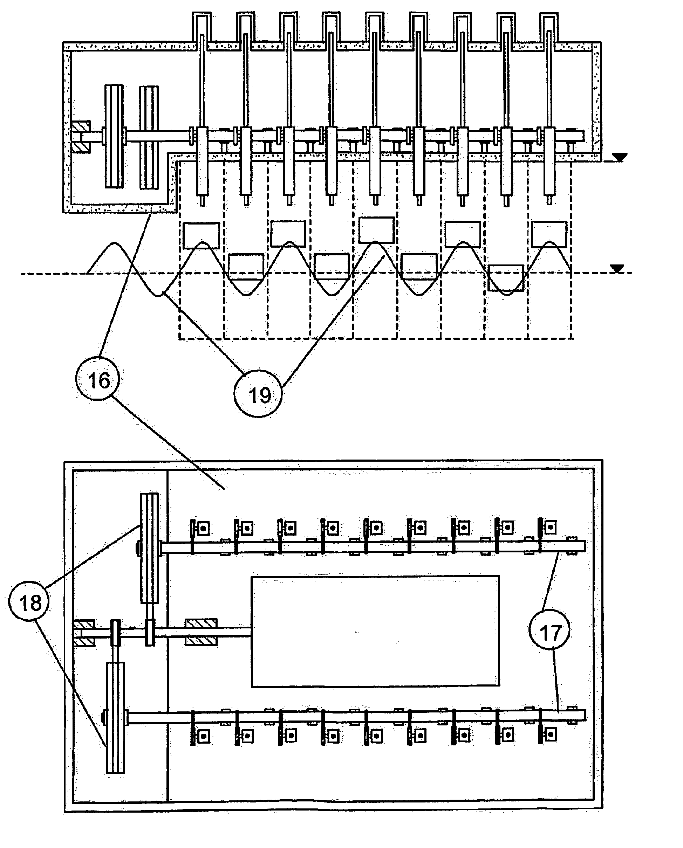

In use, in the off condition (see Figure 9 /11) before starting the station, which consists of more than one converter, the transporter arm (2) is locked in the upper position (dead point), which makes the floating cylinder (1) move up and down freely inside the cylindrical wire mesh (4) (unloading condition).

By using an external starting motor to start up the station just overcomes the inertia of the flywheel (18), which gives the following condition.

Gears (5) and (6) rotate in the clockwise direction; gears (7) and (8) rotate freely in the anticlockwise direction (negative motion); wheel (9) rotates in the clockwise direction guiding the chain belt (11) moving safety inside the gears (5) and (6) and the holder (10) and the transporter arm (2) (fixed together) stay in position without moving (dead point position) because the transporter arm fixed in that position far away from the floating cylinder.

When the transporter arm (2) is released, it takes the position according to the level of the floating cylinder (1) and it moves up and down (synchronized with the wave amplitude).

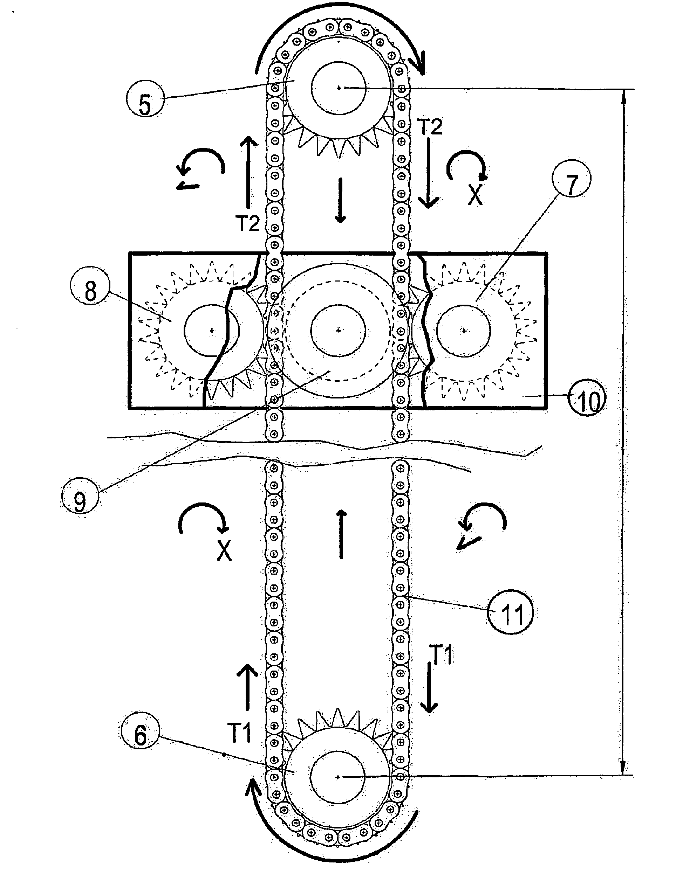

When the sea wave rises, it pushes the floating cylinder (1), then the transporter arm (2) and the holder (10) upwards, so that the gear (8) is in a lock condition (not able to rotate in clockwise direction), resulting in the tension T1 (see Figure 2/11). This forces the gear (5) to rotate in the clockwise direction, so the rod (12) and flywheel (13) which deliver the motion to the rod (17) (see Figure 9/11) and finally to the flywheel (18) then to the generator, while gear (7) rotates anticlockwise.

When the sea wave is coming down, it pulls the transporter arm (2) and the holder (10) downwards so that gear (7) is in a lock condition (not able to rotate in clockwise direction). The result is tension T2 (see Figure 2/11), which enforces the gear (5) to rotate in the clockwise direction, then the rod (12) and flywheel (13), which deliver the motion to the rod (17) (see Figure 9/11) and finally to the flywheel (18) then to the generator, while the gear (8) rotates anticlockwise.

As a result, any movement of the sea wave with any amplitude up and down results in a rotational motion in one direction.

If we consider the energy needed from one converter to be E1, the gravity energy which results from the moving parts during downward movement to be E2 and the energy resulting from the buoyant force to be E3, then E2 must be > E1 and E3 must be > (E1 +E2).

By accumulating numbers of converters together we can decrease E2 (the weight of the moving parts) to a certain limit.

We can replace the holder (10) by another one, as shown in Figure 6/11, which indicates the ratchet levers system. However, this embodiment is not claimed.

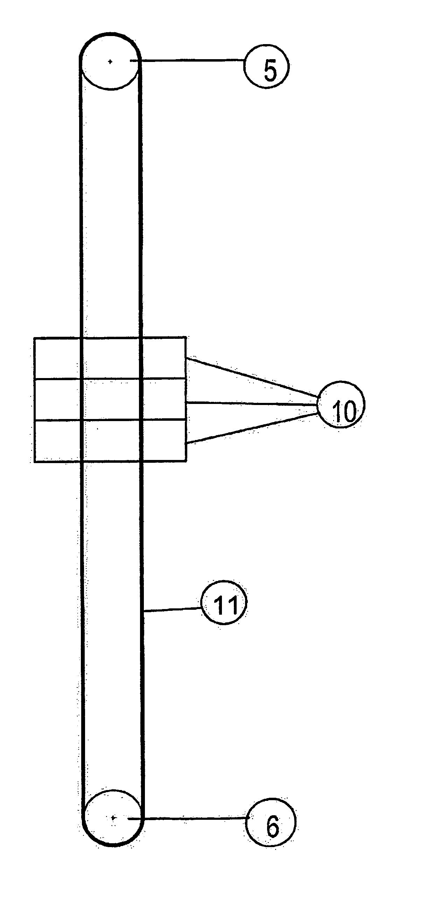

According to design parameters, we can increase the numbers of holders as shown in Figure 4/11.

Figure 5/11 indicates the free connection between the floating cylinder (1) and the transporter (2) because of the erection purposes, (on and off conditions), maintenance, mechanical vibration and others.

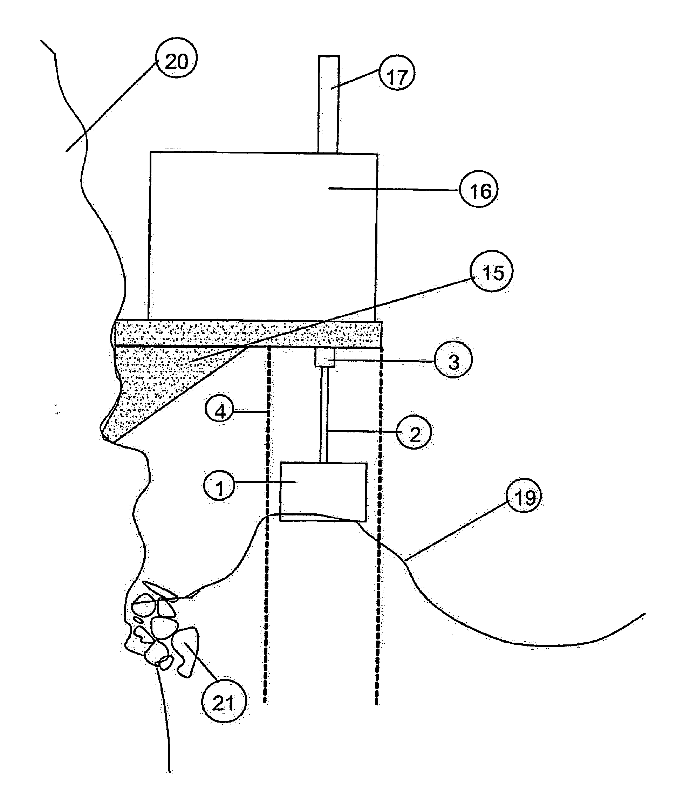

The present invention may be erected near to a beach (see Figures 8/11 and 9/11) (19) shows the sea wave; on a beach (see Figure 10/11) in which (20) shows the cliff, (19) shows the sea wave, (15) is the concrete skeleton, (16) is a station room and (21) is a beach rock; or on sea vessels (see Figure 11/11) (22) shows the sea vessel (Fig. 1 is on condition and Fig. 2 is an off condition).

## Claims

1. A wave motion conversion unit comprising:
a float (1) and a guide plate (10) connected by a transporter arm (2), wherein a first end of the transporter arm (2) is fixed to the guide plate (10) and a second end of the transporter arm (2) is fixed to the float (1);
a closed loop of chain belt (11) arranged vertically in use;
an upper ratchet gear (5) and a lower ratchet gear (6) engaged with an inside of the chain belt, wherein the upper ratchet gear (5) is adapted to be driven in a first direction and freely rotatable in a second direction, and wherein the lower ratchet gear (6) is adapted to maintain the chain belt (11) in tension in use;
a left side ratchet gear (8) and a right side ratchet gear (7), wherein both the left side ratchet gear (8) and the right side ratchet gear (7) are fixed to the guide plate (10) which is movable with respect to the chain belt (11), whereby the left side ratchet gear (8) and the right side ratchet gear (7) are disposed to either side of the chain belt (11) and are engaged with an outside of the chain belt (11), whereby both the left side ratchet gear (8) and the right side ratchet gear (7) are locked to prevent rotation in the first direction but are adapted for free rotation in the second direction; and
a wheel (9), used to guide the chain belt into contact with the left side ratchet gear (8) and the right side ratchet gear (7);
wherein the chain belt (11), the guide plate (10) and the ratchet gears (5, 6, 7, 8) are disposed in a sealed box (3).

2. A wave motion conversion system, comprising a plurality of wave motion conversion units as claimed in claim 1 connected together electrically or mechanically to provide power.

3. An emergency generator for a seagoing vessel, comprising a wave motion conversion system as claimed in claim 2 with at least one wave motion conversion unit disposed on either side of the seagoing vessel.

4. A boat having a propulsion system comprising one or more wave motion conversion units as claimed in claim 1, wherein the one or more wave motion conversion units drive a common shaft (17) through a flywheel (13) to rotate a propellor.

## Patentansprüche

1. Wellenbewegungsumwandlungseinheit, Folgendes umfassend:
einen Schwimmkörper (1) und eine Führungsplatte (10), die durch einen Transporterarm (2) verbunden sind, wobei ein erstes Ende des Transporterarms (2) an der Führungsplatte (10) festgemacht ist, und ein zweites Ende des Transporterarms (2) am Schwimmkörper (1) festgemacht ist;
einen geschlossenen Kettenbandkreis (11), der im Gebrauch vertikal angeordnet ist;
ein oberes Sperrklinkengetriebe (5) und ein unteres Sperrklinkengetriebe (6), die mit einer Innenseite des Kettenbands in Eingriff stehen, wobei das obere Sperrklinkengetriebe (5) dazu angepasst ist, in einer ersten Richtung angetrieben zu werden und sich in einer zweiten Richtung frei gedreht zu werden, und wobei das untere Sperrklinkengetriebe (6) dazu angepasst ist, das Kettenband (11) im Gebrauch gespannt zu halten;
ein linksseitiges Sperrklinkengetriebe (8) und ein rechtsseitiges Sperrklinkengetriebe (7), wobei sowohl das linksseitige Sperrklinkengetriebe (8) als auch das rechtsseitige Sperrklinkengetriebe (7) an der Führungsplatte (10) befestigt sind, die im Hinblick auf das Kettenband (11) beweglich ist, wodurch das linksseitige Sperrklinkengetriebe (8) und das rechtsseitige Sperrklinkengetriebe (7) auf beiden Seiten des Kettenbands (11) angeordnet sind und mit einer Außenseite des Kettenbands (11) in Eingriff stehen, wodurch sowohl das linksseitige Sperrklinkengetriebe (8) als auch das rechtsseitige Sperrklinkengetriebe (7) arretiert sind, um eine Drehung in der ersten Richtung zu verhindern, aber zur freien Drehung in der zweiten Richtung angepasst sind; und
ein Rad (9), das dazu verwendet wird, das Kettenband in Kontakt mit dem linksseitigen Sperrklinkengetriebe (8) und dem rechtsseitigen Sperrklinkengetriebe (7) zu führen;
wobei das Kettenband (11), die Führungsplatte (10) und die Sperrklinkengetriebe (5, 6, 7, 8) in einem abgedichteten Kasten (3) angeordnet sind.

2. Wellenbewegungsumwandlungssystem, mehrere Wellenbewegungsumwandlungseinheiten nach Anspruch 1 umfassend, die elektrisch oder mechanisch miteinander verbunden sind, um Energie bereitzustellen.

3. Notgenerator für ein Seeschiff, ein Wellenbewegungsumwandlungssystem nach Anspruch 2 umfassend, wobei mindestens eine Wellenbewegungsumwandlungseinheit auf jeder Seite des Seeschiffs angeordnet ist.

4. Boot mit einem Antriebssystem, das eine oder mehrere Wellenbewegungsumwandlungseinheit/en nach Anspruch 1 umfasst, wobei die eine oder die mehreren Wellenbewegungsumwandlungseinheit/en eine gemeinsame Welle (17) über ein Schwungrad (13) zum Drehen eines Propellers antreibt.

## Revendications

1. Unité de conversion du mouvement des vagues comprenant :
un flotteur (1) et une plaque de guidage (10) raccordés par un bras transporteur (2), dans laquelle une première extrémité du bras transporteur (2) est fixée à la plaque de guidage (10) et une seconde extrémité du bras transporteur (2) est fixée au flotteur (1) ;
une boucle fermée de courroie à chaîne (11) agencée verticalement en utilisation ;
un engrenage à cliquet supérieur (5) et un engrenage à cliquet inférieur (6) enclenchés avec un intérieur de la courroie à chaîne, dans laquelle l'engrenage à cliquet supérieur (5) est adapté pour être entraîné dans une première direction et peut être mis en rotation libre dans une seconde direction, et dans laquelle l'engrenage à cliquet inférieur (6) est adapté pour maintenir la courroie à chaîne (11) en tension en utilisation ;
un engrenage à cliquet côté gauche (8) et un engrenage à cliquet côté droit (7), dans laquelle à la fois l'engrenage à cliquet côté gauche (8) et l'engrenage à cliquet côté droit (7) sont fixés à la plaque de guidage (10) qui est mobile par rapport à la courroie à chaîne (11), moyennant quoi l'engrenage à cliquet côté gauche (8) et l'engrenage à cliquet côté droit (7) sont disposés de chaque côté de la courroie à chaîne (11) et sont enclenchés avec un extérieur de la courroie à chaîne (11), moyennant quoi à la fois l'engrenage à cliquet côté gauche (8) et l'engrenage à cliquet côté droit (7) sont verrouillés pour empêcher une rotation dans la première direction mais sont adaptés pour une rotation libre dans la seconde direction ; et
une roue (9), utilisée pour guider la courroie à chaîne en contact avec l'engrenage à cliquet côté gauche (8) et l'engrenage à cliquet côté droit (7) ;
dans laquelle la courroie à chaîne (11), la plaque de guidage (10) et les engrenages à cliquet (5, 6, 7, 8) sont disposés dans un boîtier scellé (3).

2. Système de conversion du mouvement des vagues, comprenant une pluralité d'unités de conversion du mouvement des vagues selon la revendication 1 raccordées ensemble électriquement ou mécaniquement pour fournir de l'énergie.

3. Générateur de secours pour un navire de haute mer, comprenant un système de conversion du mouvement des vagues selon la revendication 2 avec au moins une unité de conversion du mouvement des vagues disposée de chaque côté du navire de haute mer.

4. Bateau ayant un système de propulsion comprenant une ou plusieurs unités de conversion du mouvement des vagues selon la revendication 1, dans lequel les une ou plusieurs unités de conversion du mouvement des vagues entraînent un arbre commun (17) par l'intermédiaire d'un volant (13) afin de mettre en rotation une hélice.
